## Europäisches Patentamt
## European Patent Office
## Office européen des brevets

(19)

(11) Numéro de publication: **0 208 582**
**B1**

(12) **FASCICULE DE BREVET EUROPÉEN**

(45) Date de publication du fascicule du brevet: 27.04.88

(51) Int. Cl.⁴: **B 60 R 22/36,** B 65 H 75/48

(21) Numéro de dépôt: **86401278.6**

(22) Date de dépôt: **12.06.86**

(54) Mandrin d'enroulement notamment pour sangle de sécurité.

(30) Priorité: **26.06.85 FR 8509741**

(43) Date de publication de la demande: **14.01.87 Bulletin 87/3**

(45) Mention de la délivrance du brevet: **27.04.88 Bulletin 88/17**

(84) Etats contractants désignés: **DE GB IT SE**

(56) Documents cité: **DE-A-2 704 084**

(73) Titulaire: **ACIERS ET OUTILLAGE PEUGEOT Société dite:, F-25400 Audincourt (Doubs) (FR)**

(72) Inventeur: **Tourret, Alain Pierre, 52 rue de la Beuse aux Loups, F-25200 -Montbeliard (FR)**

(74) Mandataire: **Bressand, Georges, c/o CABINET LAVOIX 2 Place d'Estienne d'Orves, F-75441 Paris Cedex 09 (FR)**

EP 0 208 582 B1

## Description

La présente invention concerne les rétracteurs pour sangle de sécurité. Plus particulièrement, l'invention se rapporte à un mandrin d'enroulement pour sangle de sécurité, monté rotatif dans un support d'un rétracteur et autour duquel la sangle est destinée à s'enrouler sous l'action d'une force de rappel élastique.

On connait d'après le document FR-2 525 479 un ensemble comportant en tant que noyau central, une lame métallique enrobée dans de la matière plastique moulée dans laquelle est ancrée la sangle et qui définit deux portées axiales au moyen desquelles l'ensemble est monté à rotation dans le support. Ledit ensemble central rigide comporte a chacune de ses extrémités, une plaquette circulaire de renfort engagée perpendiculairement sur l'extrémité correspondante de la lame métallique dans la zone de portée de cet ensemble.

Par ailleurs, la périphérie de chaque plaquette n'est recouverte que d'une mince couche d'enrobage en matière plastique.

On connait également d'après le brevet FR-2 476 491, un rétracteur pour sangle de sécurité du type comportant un support, un ensemble central rigide solidaire d'une extrémité de la sangle, monté rotatif dans le support et autour duquel la sangle est destinée à s'enrouler sous l'action d'une force de rappel élastique, cet ensemble étant en outre associé à un mécanisme de blocage qui est capable d'empêcher la rotation de l'ensemble, dans le sens d'un déroulement de la sangle, lorsqu'une valeur limite d'accélération ou de décélération appliquée à la sangle et/ou au support est dépassée, ledit ensemble comportant un noyau central métallique qui est enrobé dans de la matière plastique moulée, ménageant autour de ce noyau deux portées coaxiales au moyen desquelles l'ensemble est suspendu à rotation dans le support, ledit noyau métallique présentant la forme d'un mandrin de section circulaire muni d'une fente longitudinale s'étendant sur toute sa longueur.

Par ailleurs, on connait d'après le document DE-2 704 084, un ensemble central rigide également appelé mandrin, pour un rétracteur de ce type. Une lame métallique confère à cet ensemble la rigidité mécanique requise pour transmettre les efforts exercés sur la sangle au mécanisme de blocage avec lequel elle est accouplée par une liaison rigide. Quant à l'enrobage, il est destiné à l'ancrage de l'ensemble. Enfin, cet enrobage doit fournir les portées engagées dans des trous de palier ménagés dans le support.

Les ensembles décrits dans ces documents présentent un certain nombre d'inconvénients, notamment au niveau de la transmission des contraintes exercées par la sangle sur l'enrobage plastique et les moyens de blocage de cette sangle, en raison de la configuration de cette lame métallique.

En effet, cette lame métallique contribue peu à supporter les contraintes appliquées sur le mandrin par exemple lors d'un blocage de celui-ci, et l'enrobage plastique doit être suffisamment résistant pour ne pas se détériorer notamment au niveau des surfaces de contact et de transmission de ces contraintes entre l'enrobage et la lame métallique.

De plus, lorsque des contraintes relativement importantes sont appliquées sur le mandrin et que la lame métallique de celui-ci se trouve dans certaines positions, le mandrin a tendance à fléchir.

Enfin, les ensembles de l'état de la technique sont difficilement assemblables de manière automatique, ce qui entraîne un prix de revient relativement élevé.

L invention a donc pour but de résoudre les problèmes évoqués ci-dessus et de fournir un mandrin d'enroulement pour sangle de sécurité, de conception simple, pouvant être réalisé moyennant un prix de revient peu élevé tout en présentant une bonne solidité.

A cet effet, l'invention a pour objet un mandrin d'enroulement notamment pour sangle de sécurité comprenant un corps d'enroulement en matière plastique surmoulé sur un insert métallique, le corps et l'insert comportant une échancrure pour le passage d'une extrémité de ladite sangle, caractérisé en ce que l'insert métallique est constitué par une pièce présentant une section à branches multiples, disposées symétriquement par rapport à l'axe dudit mandrin.

L'invention sera mieux comprise à l'aide de la description qui va suivre, donnée uniquement à titre d'exemple et faite en se référant aux dessins annexés sur lesquels:

- la Fig. 1 représente un premier mode de réalisation d'un insert entrant dans la constitution d'un mandrin d'enroulement selon l'invention;
- la Fig. 2 représente une vue en coupe suivant la ligne A-A de la Fig. 1;
- la Fig. 3 représente un deuxième mode de réalisation d'un insert entrant dans la constitution d'un mandrin d'enroulement selon l'invention;
- la Fig. 4 représente une vue de face d'une rondelle pouvant être montée sur une première extrémité de l'insert représenté sur la Fig. 1;
- la Fig. 5 représente une vue de face d'une rondelle pouvant être montée sur une première extrémité de l'insert représenté sur la Fig. 3;
- la Fig. 6 représente une vue de face d'une pièce pouvant être montée sur la seconde extrémité des inserts représentés sur les Fig. 1 et 3;
- la Fig. 7 représente une vue en coupe suivant la ligne B-B de la Fig. 6;
- la Fig. 8 représente une vue de derrière de la pièce représentée sur la Fig. 6;
- la Fig. 9 représente une came pouvant être montée sur la seconde extrémité des inserts métalliques et permettant de relier cet insert métallique à un dispositif de blocage de la rotation de celui-ci, ce dispositif faisant partie d'un ensemble enrouleur de ceinture de sécurité;

- les Fig. 10 et 11 représentent un mandrin d'enroulement assemblé et avant surmoulage d'un corps d'enroulement; et

- la Fig. 12 représente un mandrin d'enroulement après surmoulage du corps d'enroulement en matière plastique et dans lequel a été disposé un axe.

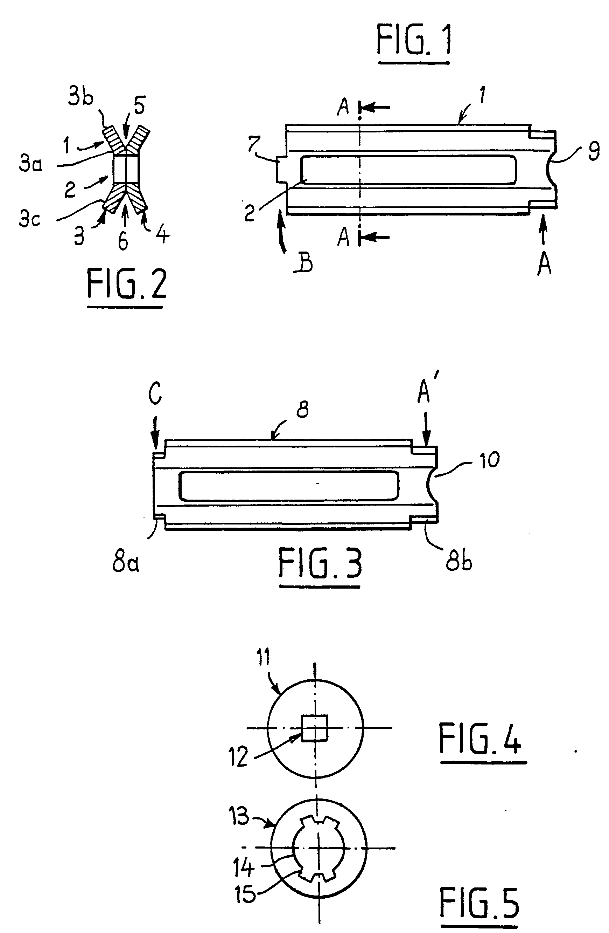

Ainsi qu'on peut le voir sur les Fig. 1 et 2, un insert entrant dans la constitution d'un mandrin selon l'invention est constitué par exemple par une pièce 1 présentant une section à quatre branches et comportant dans sa partie centrale, une échancrure 2 destinée, comme il est connu, à permettre le passage et la retenue d'une extrémité d'une sangle de ceinture de sécurité. Comme on peut le voir plus particulièrement sur la Fig. 2, l'insert 1 est constitué de deux éléments 3 et 4 identiques, présentant une section de forme générale en V à pointe applatie, et comportant donc une âme par exemple 3a à partir de laquelle s'étendent deux ailes évasées 3b et 3c. Chacun des éléments est muni d'une échancrure qui lorsque l'insert est assemblé se trouve en regard de l'échancrure de l'autre élément, de manière à définir l'échancrure 2 mentionnée précédemment.

Les éléments 3 et 4 sont fixés l'un sur l'autre par exemple par soudure de leurs âmes et cette soudure est réalisée dans les zônes 5 et 6 définies par les jonctions des ailes évasées des deux éléments. Cette soudure peut être facilitée par l'existence de bossages ou de cordons en saillie obtenus par déformation à froid sur l'un des éléments, de sorte qu'à la présentation avant soudure, une saillie sur l'un des éléments soit ménagée en face d'une partie plane de l'autre élément, ce qui donne deux saillies de soudage de part et d'autre de l'insert lorsque celui-ci est formé.

Cet insert devant être utilisé dans un rétracteur pour sangle de sécurité, tel que par exemple celui décrit dans le brevet FR-2 476 491 délivré au nom de la Demanderesse, une extrémité A de cet insert a une forme pratiquement imposée par la structure de ce rétracteur et qui sera décrite par la suite. Cependant, une extrémité B de cet insert peut présenter des formes différentes.

Ainsi par exemple, comme il est représenté sur la Fig. 1, cette extrémité B comporte un téton de centrage 7 s'étendant à partir de l'âme de chaque élément constituant l'insert. D'autre part et comme il est représenté sur la Fig. 3, un insert 8 de structure générale similaire à l'insert 1 représenté sur la Fig. 1 comporte une extrémité C, correspondant à l'extrémité B de l'insert 1, constituée par une extension 8a de section analogue à celle de l'insert, mais dont les branches sont plus courtes que celles de la section de l'insert.

Une extrémité A' de cet insert 8, de forme analogue à l'extrémité A de l'insert 1, se présente également sous la forme d'une extension 8b de section analogue a celle de l'insert, mais dont les branches sont plus courtes que celles de la section de l'insert. Il est à noter que cette extension 8b présente une longueur supérieure à l'extension 8a de l'extrémité C de l'insert.

Les inserts 1, 8 présentent à leur extrémité A et A' respectivement, un dégagement 9, 10 de forme arrondie.

Lors de l'assemblage du mandrin, on place sur l'extrémité B de l'insert 1, une rondelle 11 telle que représentée sur la Fig. 4 comportant un évidement central 12 sensiblement carré, venant s'engager sur le téton de centrage 7 de cet insert, de façon à faciliter l'orientation des différents organes du mandrin lors d'un assemblage automatique et à renforcer ce mandrin.

De manière analogue, si on utilise un insert 8 tel que représenté sur la Fig. 3, on vient rapporter sur l'extrémité C de cet insert, une rondelle 13 représentée sur la Fig. 5, comportant un évidement central 14 présentant quatre dégagements 15 ménagés symétriquement par rapport au centre de cette rondelle de façon à correspondre avec les branches de l'extension 8a de l'insert 8. Lors de l'assemblage du mandrin, cette rondelle 13 est disposée sur l'extrémité C de l'insert 8 et l'évidement 14 ainsi que les dégagements 15 de cette rondelle coopérant avec l'extension 8a de cette extrémité C, assurent une très bonne solidité dudit insert.

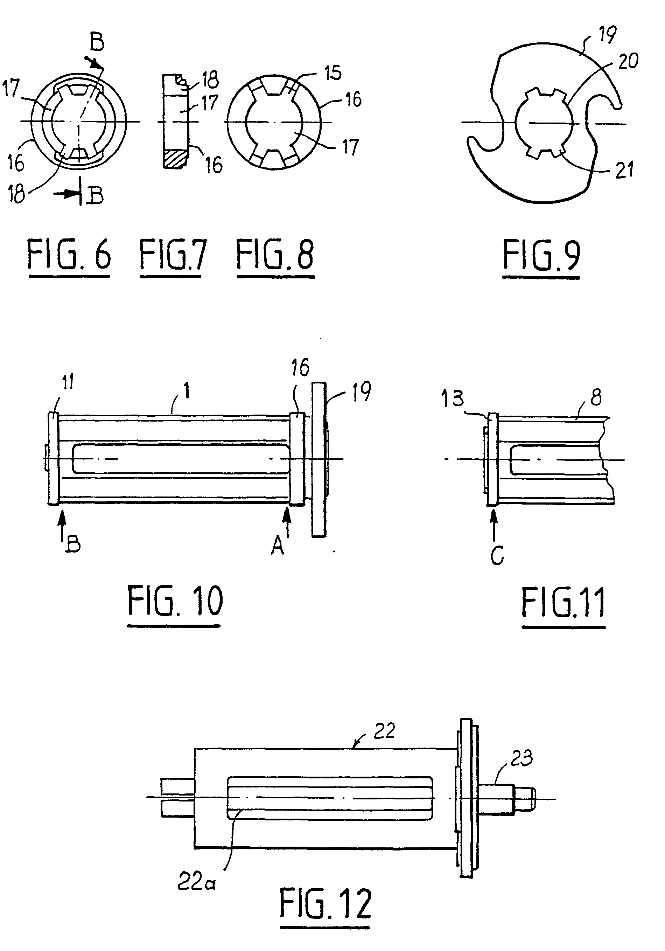

Sur les extrémités A et A' des inserts 1 et 8 respectivement, on vient ensuite emmancher une rodelle 16 représentée sur les Fig. 6, 7 et 8, comportant un évidement central 17 dans lequel sont ménagés quatre dégagements 16 de manière analogue à ceux de la rondelle 13 représentée sur la Fig. 5. Cette rondelle 16 peut être constituée avantageusement d'un métal moulé tel que le ZAMAK ou d une matière plastique identique à un matériau qui surmoulera l'ensemble du mandrin ou qui est compatible avec ce matériau.

Une fois cette rondelle mise en place, on emmanche sur l'extrémité A ou A' des inserts 1 ou 8, une came 19 constituant un plateau de blocage tel que défini dans le brevet FR-2 476 491 mentionné précédemment, et dans lequel est ménagé un évidement 20 comportant quatre dégagements 21, de manière analogue aux évidements 17 et 14 décrits précédemment, de manière à venir coopérer avec l'extension de l'extrémité A ou A' de l'insert 1 ou 8 respectivement.

Ainsi qu'on peut le voir sur la Fig. 10, qui représente un mandrin avant surmoulage, celui-ci comporte par exemple un insert 1 sur l'extrémité B duquel est disposée la rondelle 11 et sur l'extrémité A duquel sont placées la rondelle 16 et la came 19.

D'autre part, et comme il est représenté sur la Fig. 11 si l'insert 8 est utilisé, on retrouve sur l'extrémité C de celui-ci, la rondelle 13.

L'assemblage de ces pièces est ensuite réalisé par exemple par écrasement avec des couteaux se présentant sous la forme générale de V, des parties en saillie des extrémités des inserts, s'étendant au-delà de la rondelle d'extrémité 11 ou 13 et au-delà de la came 19. Ces parties en saillie peuvent être écrasées simultanément car elles sont en regard l'une de l'autre, de manière à constituer un ensemble métallique ou semi-métallique qui possède une résistance mécanique suffisante pour supporter les contraintes susceptibles de s'appliquer à la pièce terminée.

A la suite de ce montage, on constitue par des moyens de surmoulage connus en soi, un mandrin 22 (Fig. 12) présentant une échandrure 22a pour le passage de la sangle et comportant les différents organes décrits en référence aux Fig. 10 ou 11, dans lequel est passé un axe 23 destiné à supporter à rotation ce mandrin dans un rétracteur de sangle de sécurité. Cet axe est centré par l'outil de surmoulage par rapport aux différents éléments constituant l'insert, de sorte que les branches de l'insert sont disposées symétriquement par rapport à l'axe du mandrin et de manière à permettre une injection de matière plastique, de façon à enrober l'ensemble et à constituer ainsi un mandrin d'enroulement pour sangle de sécurité.

Il est à remarquer qu'avec cette structure, la matière plastique d'enrobage sert avant tout de corps d'enroulement pour la sangle et contribue peu à la solidité mécanique de l'ensemble. En effet, les contraintes entre l'axe 23 et la matière plastique constituant le corps d'enroulement sont réparties sur une grande surface, ce qui permet de diminuer les risques de dégradation de tels corps.

Bien que dans les exemples de réalisation décrits, l'insert métallique présente une section à quatre branches, disposées symétriquement par rapport à l'axe du mandrin, cet insert peut présenter une section à branches multiples d'un nombre différent mais supérieur à deux.

## Revendications

1. Mandrin d'enroulement notamment pour sangle de sécurité comprenant un corps d'enroulement en matière plastique surmoulé sur un insert métallique (1 : 8), le corps et l'insert comprenant une échancrure (2 : 22a) pour le passage d'une extrémité de la sangle, caractérisé en ce que l'insert (1 : 8) est constitué par une pièce présentant une section à branches multiples (3b, 3c), disposées symétriquement par rapport à l'axe dudit mandrin.

2. Mandrin d'enroulement selon la revendication 1, caractérisé en ce que ladite pièce constituant ledit insert, est composée de deux éléments (3, 4) comportant chacun une âme (3a) et des ailes évasées (3b, 3c), ces éléments étant fixés l'un sur l'autre par leurs âmes.

3. Mandrin d'enroulement selon la revendication 2, caractérisé en ce que lesdits éléments (3, 4) sont soudés l'un sur l'autre.

4. Mandrin d'enroulement selon l'une quelconque des revendications précédentes caractérisé en ce que des rondelles de renfort (11; 13; 16) sont disposées aux extrémités de ladite pièce constituant l'insert.

## Patentansprüche

1. Aufwickelzapfen, insbesondere für einen Sicherheitsgurt, mit einem Kunststoffaufwickelkörper, welcher auf ein Metalleinsatzteil (1, 8) aufgesetzt ist, wobei der Aufwickelkörper und das Einsatzteil eine halbmondförmige Aussparung (2, 22a) zum Durchführen eines der Gurtenden aufweisen, dadurch gekennzeichnet, daß das Einsatzteil (1, 8) aus einem Teil besteht, welches ein Wickelelement mit mehreren, symmetrisch zu der Achse des Zapfens angeordneten Schenkeln (3b, 3c) aufweist.

2. Aufwickelzapfen nach Anspruch 1, dadurch gekennzeichnet, daß das das Einsatzteil bildende Teil zwei Elemente (3, 4) mit jeweils einem inneren Bereich (3a) und aufgeweiteten Flügeln (3b, 3c) aufweist, wobei diese Elemente mit ihrem inneren Bereich aneinander befestigt sind.

3. Aufwickelzapfen nach Anspruch 2, dadurch gekennzeichnet, daß die Elemente (3, 4) zusammengeschweißt sind.

4. Aufwickelzapfen nach einem der vorgenannten Ansprüche, dadurch gekennzeichnet, daß an den Enden des Einsatzteiles Verstärkungsscheiben (11; 13; 16) angeordnet sind.

## Claims

1. Winding mandrel, especially for a safety strap, comprising a plastic winding body moulded on a metal insert (1; 8), the body and the insert having a slot (2; 22a) for the passage of one end of the strap, characterized in that the insert (1; 8) consists of a piece having a cross-section with multiple branches (3b, 3c) arranged symmetrically in relation to the axis of the said mandrel.

2. Winding mandrel according to Claim 1, characterized in that the said piece forming the said insert is composed of two elements (3, 4), each comprising a core (3a) and flared wings (3b, 3c), these elements being fastened to one another by means of their cores.

3. Winding mandrel according to Claim 2, characterized in that the said elements (3, 4) are welded to one another.

4. Winding mandrel according to any one of the preceding Claims, characterised in that reinforcing washers (11; 13; 16) are arranged at the ends of the said piece forming the insert.

FIG. 1

FIG.2

FIG.3

FIG.4

FIG.5

FIG. 6 FIG.7 FIG.8 FIG.9

FIG. 10 FIG.11

FIG.12